# EUROPÄISCHE PATENTANMELDUNG

(11) **EP 4 349 768 A2**
(43) Veröffentlichungstag der Anmeldung: **10.04.2024**
(21) Anmeldenummer: 23194906.6
(22) Anmeldetag: 01.09.2023
(51) Int. Cl.: B66F 9/24, B66F 17/00, B60Q 1/26, B60Q 1/50, G07C 5/08, B66F 9/075, H04W 4/46

(54) **FLURFÖRDERZEUG MIT EINER BELEUCHTUNGSEINRICHTUNG, LOGISTIKSYSTEM MIT MEHREREN FLURFÖRDERZEUGEN, VERFAHREN ZUM BETRIEB DER BELEUCHTUNGSEINRICHTUNG UND DES LOGISTIKSYSTEMS**

(30) Priorität: 15.09.2022 DE 102022123668
(71) Anmelder: Jungheinrich Aktiengesellschaft, 22047 Hamburg (DE)
(72) Erfinder: WEGNER, Christian, 25436 Moorrege (DE); ALBRECHT, Clemens, 24558 Henstedt-Ulzburg (DE)
(74) Vertreter: Seemann & Partner Patentanwälte mbB

(57) **Zusammenfassung**

Die Erfindung betrifft ein Flurförderzeug (2) mit einer Beleuchtungseinrichtung (4), ein Logistiksystem (32) mit mehreren Flurförderzeugen (2) sowie Verfahren zum Betrieb der Beleuchtungseinrichtung (4) sowie des Logistiksystems (32). Das Flurförderzeug (2) umfasst zumindest eine Fahrzeugleuchte (6) und eine Steuereinheit (16) zum Ansteuern der Fahrzeugleuchte (6). Die Steuereinheit (16) ist dazu eingerichtet zumindest einen Fahrzeugzustandsparameter zu erfassen und die Fahrzeugleuchte (6) in einem auf dem zumindest einen Fahrzeugzustandsparameter basierenden Muster anzusteuern.

## Beschreibung

Die Erfindung betrifft ein Flurförderzeug mit einer Beleuchtungseinrichtung, umfassend zumindest eine Fahrzeugleuchte und eine Steuereinheit zum Ansteuern der Fahrzeugleuchte. Die Erfindung betrifft ebenso ein Logistiksystem mit zumindest einem Ladegerät und einem elektrisch angetriebenen Flurförderzeug mit einer Beleuchtungseinrichtung. Ferner betrifft die Erfindung ein Logistiksystem, umfassend eine Vergleichseinheit und zumindest ein erstes und ein zweites solches Flurförderzeug. Die Erfindung betrifft außerdem ein Verfahren zum Betrieb einer Beleuchtungseinrichtung eines Flurförderzeugs, wobei die Beleuchtungseinrichtung zumindest eine Fahrzeugleuchte und eine Steuereinheit zum Ansteuern der Fahrzeugleuchte umfasst. Die Erfindung betrifft ferner ein Verfahren zum Betrieb eines Logistiksystems, umfassend eine Vergleichseinheit und zumindest ein erstes und ein zweites Flurförderzeug.

Flurförderzeuge umfassen eine Fahrzeugbeleuchtung, die verschiedene Fahrzeugleuchten umfasst, die jedoch nur teilweise mit den Fahrzeugleuchten einer Beleuchtungseinrichtung eines im öffentlichen Straßenverkehr betriebenen Kraftfahrzeugs vergleichbar sind. Die Fahrzeugbeleuchtung eines für den Straßenverkehr zugelassenen Kraftfahrzeugs unterliegt gesetzlichen Vorschriften. Es sind bestimmte Fahrzeugleuchten für bestimmte Funktionen vorgesehen, denen jeweils zusätzlich festgelegte Farben zugewiesen sind. Die Fahrzeugbeleuchtung umfasst beispielsweise und unter anderem Fahrzeugleuchten für das Fern-, Abblend- und Standlicht, für den Fahrtrichtungsanzeiger (Blinker), Schlussleuchten (Rücklichter), Bremsleuchten usw..

Flurförderzeuge, die nicht auf öffentlichen Straßen betrieben werden, unterliegen nicht den gesetzlichen Vorschriften, weisen jedoch in der Regel ebenfalls die vorgeschriebene Fahrzeugbeleuchtung auf. Zusätzlich zu der Fahrzeugbeleuchtung können Flurförderzeuge mit weiteren Fahrzeugleuchten, beispielsweise Warnleuchten oder dergleichen, ausgestattet sein. Diese zusätzlichen Fahrzeugleuchten sind in vielen Fällen zu einem ganz bestimmten Zweck an dem Flurförderzeug angebracht und zeigen beispielsweise an, dass das Flurförderzeug betriebsbereit ist.

Es ist eine Aufgabe der Erfindung, ein Flurförderzeug mit einer Beleuchtungseinrichtung, ein Logistiksystem, umfassend mehrere solcher Flurförderzeuge, ein Verfahren zum Betrieb einer Beleuchtungseinrichtung eines Flurförderzeugs sowie ein Verfahren zum Betrieb eines solchen Logistiksystems anzugeben, wobei die Möglichkeit geschaffen werden soll, Informationen betreffend das Flurförderzeug einfach und effizient auf optischem Wege an eine in Sichtweite des Flurförderzeugs befindliche Person zu kommunizieren.

Die Aufgabe wird gelöst durch ein Flurförderzeug mit einer Beleuchtungseinrichtung, umfassend zumindest eine Fahrzeugleuchte und eine Steuereinheit zum Ansteuern der Fahrzeugleuchte, wobei das Flurförderzeug dadurch fortgebildet ist, dass die Steuereinheit dazu eingerichtet ist, zumindest einen Fahrzeugzustandsparameter zu erfassen und die Fahrzeugleuchte in einem auf dem zumindest einen Fahrzeugzustandsparameter basierenden Muster anzusteuern.

Vorteilhaft können durch den Fahrzeugzustandsparameter charakterisierte Fahrzeuginformationen über eine oder mehrere an dem Flurförderzeug vorhandene Fahrzeugleuchten kommuniziert werden. So ist es für eine Person, die sich in Sichtweite des Flurförderzeugs befindet, auf einfache und schnelle Weise möglich, Informationen betreffend den zumindest einen Fahrzeugzustandsparameter zu erhalten. Die Person, beispielsweise eine Logistikmitarbeiterin, kann auf diese Weise schnell und effizient beispielsweise ein geeignetes oder für eine bestimmte Aufgabe vorgesehenes Flurförderzeug ausfindig machen.

Ferner ist es vorteilhaft nicht erforderlich, speziell zum Zweck der optischen Kommunikation der Fahrzeuginformation an dem Flurförderzeug eine zusätzliche Fahrzeugleuchte anzubringen. Mit anderen Worten ist die Fahrzeugleuchte bevorzugt eine bereits an dem Flurförderzeug vorhandene Fahrzeugleuchte, welche in anderem Kontext auch eine andere Aufgabe erfüllen kann.

Das Muster, in dem die Fahrzeugleuchte von der Steuereinheit angesteuert wird kann eine Farbe, eine Leuchtintensität und/oder eine rhythmische Abfolge der abgegebenen Lichtzeichen sein. Umfasst die Fahrzeugleuchte mehrere Lichtquellen, beispielsweise ein LED-Lichtband, kann als mögliches Muster die Ansteuerung einzelner ausgewählter Lichtquellen beispielsweise des LED-Lichtbands, die Ansteuerung mehrerer Lichtquellen der Fahrzeugleuchte oder auch die Ansteuerung aller Lichtquellen vorgesehen sein. Dieses Muster, in dem die Ansteuerung der Lichtquellen erfolgt, kann insbesondere mit einem weiteren Muster kombiniert werden, welches beispielsweise in der Leuchtintensität und/oder einer rhythmischen Abfolge besteht. Es ergibt sich ein kombiniertes Muster, beispielsweise ein dynamisches Lichtmuster.

Der Fahrzeugzustandsparameter charakterisiert insbesondere einen Zustand des Flurförderzeugs oder einen Zustand zumindest eines seiner Bauteile, Module oder Bestandteile. Insbesondere charakterisiert der Fahrzeugzustandsparameter einen Parameter eines Energiespeichers, beispielsweise einer Traktionsbatterie, des Flurförderzeugs. Der Fahrzeugzustandsparameter kann einen Ladezustand, eine maximale Speicherkapazität und/oder einen Zustand der Traktionsbatterie des Flurförderzeugs angeben. Ausgehend von dieser Information wird beispielsweise die Fahrzeugleuchte in Abhängigkeit des Ladezustands in einem Muster angesteuert, welches den Ladezustand charakterisiert. Beispielsweise wird die Fahrzeugleuchte in roter Farbe aktiviert, wenn der Ladezustand sich unterhalb eines bestimmten Grenzwertes befindet, beispielsweise geringer als 10 % ist. Liegt der Ladezustand in einem vorgegebenen mittleren Bereich, beispielsweise zwischen 10 % und 70 %, wird die Fahrzeugleuchte in gelber Farbe aktiviert. Wenn der Ladezustand oberhalb eines bestimmten Grenzwertes liegt, beispielsweise größer als 70 % ist, kann die Fahrzeugleuchte in grüner Farbe angesteuert werden. Die Logistikmitarbeiterin wird so in die Lage versetzt, den Ladezustand des Flurförderzeugs schnell und einfach zu erkennen.

Der Fahrzeugzustandsparameter kann ferner beispielsweise ein Servicebedürfnis des Flurförderzeugs anzeigen. Die Fahrzeugleuchte wird beispielsweise rot blinkend aktiviert. So ist für die Logistikmitarbeiterin sofort erkennbar, dass es sich bei dem Flurförderzeug um dasjenige handelt, an welchem ein Serviceauftrag zu erfüllen ist. Insbesondere charakterisiert der Fahrzeugzustandsparameter einen Wert eines Fehlerspeichers des Flurförderzeugs.

Gemäß einer Ausführungsform ist das Flurförderzeug vorteilhaft dadurch fortgebildet, dass die zumindest eine Fahrzeugleuchte in einer oberen Hälfte, insbesondere in einem oberen Drittel, ferner insbesondere in einem oberen Viertel einer Karosserie des Flurförderzeugs angeordnet ist.

Die Anordnung der Fahrzeugleuchte in den genannten Bereichen der Karosserie des Flurförderzeugs, also in einem oberen Bereich des Flurförderzeugs, erlaubt es, das von der Fahrzeugleuchte abgegebene Lichtzeichen bereits aus großer Distanz oder in einer Situation, in der das Flurförderzeug teilweise verdeckt ist, zu erkennen. Der genannte obere Bruchteil (Hälfte, Drittel, Viertel) der Karosserie des Flurförderzeugs wird beispielsweise in Bezug auf die maximale Höhe der Karosserie des Flurförderzeugs bestimmt. Die maximale Höhe wird beispielsweise im Bereich einer Dachkonstruktion an einem höchsten Punkt des Flurförderzeugs, abgesehen von dessen Mast, bestimmt. Beispielsweise ist die obere Hälfte der Karosserie des Flurförderzeugs derjenige Bereich der Karosserie, der sich oberhalb der halben maximalen Höhe der Karosserie erstreckt. Entsprechendes gilt für das obere Drittel oder das obere Viertel der Karosserie. Es ist gemäß weiterer Ausführungsformen vorgesehen, dass die Fahrzeugleuchte im Bereich einer Dachkonstruktion des Flurförderzeugs oder an einem höchsten Punkt der Karosserie des Flurförderzeugs angeordnet ist. Wie bereits erwähnt, verbessert die hohe Position der Fahrzeugleuchte an der Karosserie deren Sichtbarkeit.

Gemäß einer weiteren vorteilhaften Ausführungsform ist vorgesehen, dass die Fahrzeugleuchte ein Teil einer Fahrzeugbeleuchtung des Flurförderzeugs ist.

Die Verwendung einer Fahrzeugleuchte, welche Teil der Fahrzeugbeleuchtung des Flurförderzeugs ist, ist vorteilhaft und effizient, da eine ohnehin vorhandene Fahrzeugleuchte zu den genannten Zwecken eingesetzt werden kann. Es ist somit nicht erforderlich, eine zusätzliche Fahrzeugleuchte an dem Flurförderzeug anzubringen. Die Fahrzeugbeleuchtung des Flurförderzeugs umfasst typischerweise ein Frontlicht, vergleichbar mit einem Tagfahrlicht bei PKWs, und ein Rücklicht, um die Sichtbarkeit des Fahrzeugs während des Betriebs zu verbessern. Flurförderzeuge werden in der Regel nicht im öffentlichen Verkehr betrieben und verfügen daher auch in der Regel nicht über die gemäß den regulatorischen Vorgaben vorgesehenen Fahrzeugleuchten. Vorteilhaft können jedoch die vorhandenen Fahrzeugleuchten zur Anzeige des Fahrzeugzustandsparameters in einem für den Fahrzeugzustandsparameter charakteristischen Muster angesteuert werden.

Insbesondere ist in diesem Zusammenhang gemäß einer weiteren Ausführungsform vorgesehen, dass die Fahrzeugleuchten der Fahrzeugbeleuchtung in einer Farbe angesteuert werden, die gemäß den üblichen Farben, wie sie beispielsweise für den Betrieb im öffentlichen Straßenverkehr vorgesehen sind, abweichen. Durch diese nicht intuitive Farbgebung wird das von dem Flurförderzeug abgegebene Lichtsignal vom Betrachter direkt als Muster erkannt, welches auf einen Fahrzeugzustandsparameter hinweist. Durch diese offensichtliche Abweichung ist es außerdem vorteilhaft leicht möglich zu erkennen, dass das Lichtsignal, welches von der entsprechenden Fahrzeugleuchte abgegeben wird, nicht im Zusammenhang mit dem normalen Betrieb des Flurförderzeugs steht, sondern eine Information betreffend den Fahrzeugparameter darstellt. Beispielsweise können die Fahrlichter, welche im üblichen Betrieb mit weißem Licht betrieben werden, in verschiedenen Farben angesteuert werden, um so den Ladezustand der Traktionsbatterie anzuzeigen. Beispielsweise können die Farben Rot, Gelb, Grün eingesetzt werden, so wie weiter oben im Text bereits erläutert.

Gemäß einer weiteren vorteilhaften Ausführungsform ist das Flurförderzeug ferner dadurch fortgebildet, dass die Steuereinheit ferner dazu eingerichtet ist, ein Näherungssignal zu erfassen und in Reaktion auf eine erfolgreiche Erfassung des Näherungssignals eine Ansteuerung der Fahrzeugleuchte zu aktivieren.

Die Übertragung des Näherungssignals erfolgt mittels geeigneter und allgemein bekannter drahtloser Kommunikationstechnik für kurze Distanzen, wie beispielsweise Bluetooth oder WLAN. Eine Logistikmitarbeiterin trägt beispielsweise ein persönliches Benutzerendgerät oder Tag bei sich, welches das Näherungssignal aussendet. Die Erfassung dieses Näherungssignals ist vorteilhaft, da das Flurförderzeug bei Annäherung der Logistikmitarbeiterin ein entsprechendes Lichtzeichen an der Fahrzeugbeleuchtung ausgibt, ohne dass hierzu eine gesonderte Aktivierung dieses Signals erforderlich wäre.

Beispielsweise kann bei Annäherung eines Servicemitarbeiters das Flurförderzeug diesem direkt durch ein entsprechendes Lichtzeichen anzeigen, dass der Fahrzeugparameter auf ein Servicebedürfnis des Flurförderzeugs hinweist. Der Servicemitarbeiter kann sich so direkt diesem Flurförderzeug zuwenden und die entsprechenden Servicearbeiten durchführen.

Bei dem Fahrzeugzustandsparameter handelt es sich gemäß weiterer Ausführungsformen um ein Ausstattungsmerkmal des Flurförderzeugs, einen Ladezustand einer Traktionsbatterie des Flurförderzeugs, eine Betriebsbereitschaft des Flurförderzeugs und/oder um ein Servicebedürfnis des Flurförderzeugs.

Der Fahrzeugzustandsparameter ist insbesondere ein interner Fahrzeugzustandsparameter. Das Muster, in dem die Fahrzeugleuchte von der Steuereinheit angesteuert wird, charakterisiert insbesondere einen Wert dieses Fahrzeugzustandsparameters.

Beispielsweise kann das Muster derart gewählt sein, dass ein bestimmtes Ausstattungsmerkmal des Flurförderzeugs angezeigt wird. Dieses Ausstattungsmerkmal betrifft beispielsweise die Funktionalität des Flurförderzeugs. So kann beispielsweise ein bestimmter Farbcode anzeigen, dass das Flurförderzeug dazu eingerichtet ist, eine bestimmte Funktion auszuführen. Ein anderer Farbcode oder ein Rhythmus der Ansteuerung der Fahrzeugleuchte kann beispielsweise darauf hinweisen, dass das Flurförderzeug dazu eingerichtet ist in einer bestimmten Art und Weise bedient zu werden. So kann beispielsweise eine Klassifikation der Flurförderzeuge vorgenommen werden. Verfügt beispielsweise eine Logistikmitarbeiterin lediglich über die Zulassung einen bestimmten Typ von Flurförderzeug zu bedienen, z.B., weil bestimmte interne Schulungen und Qualifikationen noch nicht absolviert wurden, so kann das Flurförderzeug, beispielsweise durch einen entsprechenden Farbcode: rot (kein Zugriff) und grün (Zugriff gestattet) anzeigen, dass die betreffende Logistikmitarbeiterin befugt ist das Flurförderzeug zu bedienen.

In diesem Zusammenhang ist es insbesondere vorgesehen, dass Fahrzeugleuchten, die Teil der Fahrzeugbeleuchtung des Flurförderzeugs sind, in einer von ihrer üblichen oder vorgeschriebenen Farbe abweichenden anderen Farbe entsprechend dem vorgesehenen Muster (welches die Farbe beinhalten kann) angesteuert werden. Beispielsweise ist denkbar, dass ein bestimmtes Ausstattungsmerkmal des Flurförderzeugs durch ein Lichtzeichensignal in grüner Farbe angezeigt wird, obwohl Grün keine Farbe ist, in der eine Fahrzeugleuchte der Fahrzeugbeleuchtung gemäß der üblichen Farbgebung betrieben wird.

Der Ladezustand einer Traktionsbatterie des Flurförderzeugs kann ebenfalls und beispielsweise durch Verwendung einer entsprechenden Farbcodierung angezeigt werden. Dies kann auch in Kombination mit einer Betriebsbereitschaft des Flurförderzeugs erfolgen. So kann beispielsweise durch ein Lichtzeichen in grüner Farbe angezeigt werden, dass der Ladevorgang der Traktionsbatterie beendet ist. Ein wei-ßes Lichtzeichen kann anzeigen, dass das Flurförderzeug uneingeschränkt einsatzfähig ist. Ein gelbes oder oranges Lichtzeichen kann hingegen anzeigen, dass der Ladevorgang der Traktionsbatterie noch nicht abgeschlossen ist. Ein rotes Lichtzeichen kann einen Systemfehler des Flurförderzeugs anzeigen, rot blinkend kann ein kritischer Systemfehler angezeigt werden. So wird ein Benutzer des Flurförderzeugs anhand von dessen Lichtzeichen umfangreich über den Zustand des Flurförderzeugs informiert.

Für alle diese Anzeigen kann eine einzige Fahrzeugleuchte verwendet werden. Dabei ist im Kontext der vorliegenden Beschreibung der Begriff "Fahrzeugleuchte" nicht derart einschränkend zu verstehen, dass es sich um eine einzelne separate Fahrzeugleuchte handeln muss. Bei einer "Fahrzeugleuchte" kann es sich ebenfalls um ein Leuchtsegment einer größeren Beleuchtungseinheit handeln.

Gemäß einer weiteren vorteilhaften Ausführungsform ist das Flurförderzeug dadurch fortgebildet, dass der Fahrzeugzustandsparameter mit mehreren Berechtigungskategorien verknüpft ist und das Näherungssignal eine Information betreffend eine Berechtigungskategorie umfasst und wobei die Steuereinheit ferner dazu eingerichtet ist in Reaktion auf eine erfolgreiche Erfassung des Näherungssignals die Berechtigungskategorie des Fahrzeugzustandsparameters und die Berechtigungskategorie des Näherungssignals zu vergleichen und eine Ansteuerung der Fahrzeugleuchte in Abhängigkeit eines Vergleichsergebnisses vorzunehmen.

Beispielsweise sind die Berechtigungskategorien Berechtigungen für einen Servicetechniker, einen Lagermitarbeiter und einen Lagerleiter. Je nachdem, welche Berechtigungskategorie in dem Näherungssignal erkannt wird, also beispielsweise eine der drei o.g. Kategorien, kann das Flurförderzeug diese Kategorie mit der Kategorie des Fahrzeugzustandsparameters vergleichen. Betrifft der Fahrzeugzustandsparameter beispielsweise ein Servicebedürfnis und nähert sich entsprechend der in dem Näherungssignal vorhandenen Berechtigungskategorie ein Servicetechniker, so kann das Flurförderzeug ein positives Vergleichsergebnis ziehen und beispielsweise die Fahrzeugleuchte mit grünem Lichtsignal ansteuern. Nähert sich hingegen beispielsweise ein Lagermitarbeiter oder ein Lagerleiter, so würde das entsprechende Vergleichsergebnis negativ ausfallen, und die Fahrzeugleuchte würde ein rotes Lichtsignal abgeben, was dem Lagermitarbeiter und Lagerleiter anzeigt, dass das entsprechende Flurförderzeug für den normalen Betrieb gesperrt ist.

Betrifft der Fahrzeugzustandsparameter beispielsweise ein bestimmtes Ausstattungsmerkmal, kann aus dem Vorhandensein dieses Ausstattungsmerkmals, beispielsweise ein vorhandenes Assistenzsystem zum automatischen Bremseingriff oder dergleichen, wiederum eine Berechtigungskategorie abgeleitet werden. Nähert sich beispielsweise ein Lagermitarbeiter, welcher aufgrund betrieblicher Empfehlung stets Fahrzeuge mit Assistenzsystem zum automatischen Bremseingriff bedienen soll, so kann diese Berechtigungskategorie in ein Näherungssignal integriert sein. Die Berechtigungskategorie wird von einer mobilen Einheit, die dieser Lagermitarbeiter mitführt, gemeinsam mit dem Näherungssignal übertragen. Bei entsprechender Kommunikation und Empfang eines derart kategorisierten Näherungssignals von einem Flurförderzeug, kann das Flurförderzeug wiederum einen Vergleich durchführen und beispielsweise in dem Fall, dass das Ausstattungsmerkmal "Assistenzsystem zum automatischen Bremseingriff" bei dem betreffenden Flurförderzeug vorliegt, ein positives Vergleichsergebnis ziehen. In diesem Fall würde das Flurförderzeug beispielsweise die Fahrzeugleuchte mit grüner Farbe ansteuern, um dem Lagermitarbeiter anzuzeigen, dass das betreffende Flurförderzeug über die für ihn vorgesehene Ausstattung verfügt. In ähnlicher Weise kann verfahren werden, wenn ein Lagermitarbeiter beispielsweise eine spezielle Schulung benötigt, um ein bestimmtes Flurförderzeug oder Flurförderzeuge einer bestimmten Kategorie bedienen zu dürfen. In einem solchen Fall ist das Ausstattungsmerkmal beispielsweise die maximal mögliche Hublast oder Hubhöhe. Bei Überschreiten bestimmter Grenzwerte können beispielsweise zusätzliche Schulungen erforderlich sein. Die Berechtigungskategorie des Mitarbeiters würde in diesem Falle aussagen, ob dieser über eine entsprechende Schulung verfügt, also berechtigt ist, Flurförderzeuge, die das fragliche Ausstattungsmerkmal aufweisen, zu bedienen. Wiederum kann abhängig von dem Vergleichsergebnis das Flurförderzeug die Fahrzeugleuchte mit entsprechendem Lichtsignal ansteuern.

Gemäß einem weiteren Ausführungsbeispiel ist der Fahrzeugzustandsparameter erneut ein Servicebedürfnis des Flurförderzeugs. Das Vorliegen eines Servicebedürfnisses, beispielsweise das Vorliegen eines Serviceauftrags, würde in der entsprechenden Berechtigungskategorie reflektiert. Nähert sich nun ein Servicemitarbeiter dem Flurförderzeug, so umfasst das Näherungssignal, welches eine mobile Einheit aussendet, die der Servicemitarbeiter mitführt, wiederum Informationen betreffend die eigene Berechtigungskategorie, welche den Inhaber der mobilen Einheit als Servicekraft identifiziert. Das Vorliegen eines Serviceauftrags und die Identifikation des Mitarbeiters als Servicemitarbeiter führt zu einem positiven Vergleichsergebnis. Das Flurförderzeug kann dementsprechend ein Lichtsignal an der Fahrzeugleuchte ausgeben, welches das Flurförderzeug als servicebedürftig anzeigt.

Außerdem kann vorgesehen sein, dass die Steuereinheit derart eingerichtet ist, dass diese das Fahrzeug für weitere Anfragen sperrt, sobald ein positives Vergleichsergebnis gefunden wurde, so dass beispielsweise der Service in jedem Fall durchgeführt werden kann.

Gemäß einer weiteren vorteilhaften Ausführungsform betrifft der Fahrzeugzustandsparameter beispielsweise ein Ausstattungsmerkmal des Flurförderzeugs, einen Ladezustand einer Traktionsbatterie des Flurförderzeugs, eine Betriebsbereitschaft des Flurförderzeugs und ein Servicebedürfnis des Flurförderzeugs. Aus diesen Parametern (in einem solchen Fall ist der Fahrzeugzustandsparameter ein Array oder Vektor) können einzelne Unterparameter gegenüber anderen für die Wiedergabe eines entsprechenden Lichtzeichens priorisiert werden. Beispielsweise kann eine Priorisierung des Servicebedürfnisses gegenüber weiteren Parametern vorgenommen werden. Ebenso kann beispielsweise ein Servicebedürfnis gegenüber der Anzeige eines Ladezustands der Traktionsbatterie priorisiert werden. Welche Fahrzeugparameter angezeigt werden, kann wiederum anhand der Berechtigungskategorie festgelegt werden, welche in dem Näherungssignal vorhanden ist. Beispielsweise kann das Näherungssignal in der zugehörigen Berechtigungskategorie angeben, dass lediglich einer der vorgenannten drei Subparameter angezeigt wird, beispielsweise ein Ladezustand der Traktionsbatterie dem Lagermitarbeiter und demgegenüber das Servicebedürfnis dem Servicetechniker.

Die Berechtigungskategorie kann außerdem eine Berechtigung sein, das fragliche Flurförderzeug zu bedienen. Hierzu liegt beispielsweise in der Steuereinheit eine entsprechende Liste mit berechtigten Fahrzeugführern vor, ggf. unter zusätzlicher Berücksichtigung der jeweiligen individuellen Qualifikationen oder Einschränkungen bezüglich Ausstattungsmerkmalen und/oder vorhandenen Assistenzsystemen.

Gemäß einer weiteren vorteilhaften Ausführungsform ist das Flurförderzeug dadurch fortgebildet, dass der Fahrzeugzustandsparameter ein interner Fahrzeugzustandsparameter ist und die Steuereinheit dazu eingerichtet ist den internen Fahrzeugzustandsparameter und zumindest einen Fahrzeugzustandsparameter zumindest eines weiteren Flurförderzeugs als zumindest einen externen Fahrzeugzustandsparameter zu erfassen, den internen und den zumindest einen externen Fahrzeugzustandsparameter miteinander zu vergleichen und die Fahrzeugleuchte in einem Muster anzusteuern, welches auf einem Ergebnis des Vergleichs der Fahrzeugzustandsparameter basiert.

Die Steuereinheit ist also insbesondere dazu eingerichtet einen Vergleich zwischen zumindest einem internen Fahrzeugparameter und einem oder mehreren externen Fahrzeugzustandsparametern vorzunehmen. Dies ist vorteilhaft, da auf diese Weise eine Eigenschaft des Flurförderzeugs im Vergleich zu anderen Flurförderzeugen festgestellt und angezeigt werden kann. Handelt es sich bei dem Fahrzeugzustandsparameter beispielsweise um den Ladezustand der Traktionsbatterie des jeweiligen Flurförderzeugs, so vergleicht das Flurförderzeug den Ladezustand der eigenen Traktionsbatterie mit dem Ladezustand der Traktionsbatterie eines weiteren Flurförderzeugs. Anschließend wird an der Fahrzeugleuchte ein Lichtzeichen ausgegeben, dessen Muster auf einem Ergebnis dieses Vergleichs basiert.

Anders als bereits weiter oben im Text erwähnt, kann nun beispielsweise farbcodiert nicht nur der Absolutwert des Ladezustands der eigenen Traktionsbatterie angegeben werden, sondern dieser kann ins Verhältnis zum Ladezustand der Traktionsbatterie des anderen Flurförderzeugs gestellt werden. So kann beispielsweise ein Flurförderzeug mit grün blinkender Fahrzeugleuchte anzeigen, dass es im Vergleich zu dem zumindest einen weiteren Flurförderzeug den höheren Ladezustand der Traktionsbatterie aufweist. Da ein wiederholtes Zwischenladen der Traktionsbatterie bei Praxisanwendungen mehr und mehr in den Fokus rückt, wäre das Flurförderzeug mit der vergleichsweise höheren Batterieladung für den unmittelbaren Betrieb zu bevorzugen.

Eine ähnliche Anzeige könnte auch beispielsweise im Hinblick auf ein Servicebedürfnis eines Flurförderzeugs im Vergleich zu einem anderen Flurförderzeug vorgenommen werden. Sollte ein Flurförderzeug ein geringeres Servicebedürfnis als ein anderes Flurförderzeug haben, so kann dies beispielsweise mit einem grünen Lichtzeichen angezeigt werden. Beispielsweise ist das Wartungsintervall bei diesem Flurförderzeug noch länger oder hat einen kritischen Wert noch nicht unterschritten. Ein Logistikmitarbeiter kann nun dasjenige Fahrzeug auswählen, bei dem noch kein akutes Servicebedürfnis vorliegt. So kann unnötiger Verschleiß der Flurförderzeuge vermieden werden. Durch die Kommunikation der Flurförderzeuge untereinander und eine entsprechende Ansteuerung der Fahrzeugleuchte in Abhängigkeit des Ergebnisses eines durchgeführten Vergleichs kann also der Betrieb einer Fahrzeugflotte insgesamt verbessert werden.

Der durchgeführte Vergleich ist beispielsweise ein größer/kleiner-Vergleich, die Bestimmung eines Maximums oder Minimums, die Klärung der Frage, ob bestimmte Charakteristika, wie beispielsweise Ausstattungsmerkmale des Flurförderzeugs, vorliegen oder nicht, also ein binärer wahr/falsch-Vergleich.

Im Kontext der vorliegenden Beschreibung ist unter einem Erfassen eines Parameters sowohl das Empfangen eines entsprechenden Parameters als auch das Abfragen eines entsprechenden Parameters zu verstehen. Selbstverständlich kann das Empfangen und aktive Abfragen auch miteinander kombiniert werden. Die Fahrzeugleuchte muss nicht als einzelne separate Fahrzeugleuchte ausgestaltet sein. Es kann sich ebenfalls um ein Segment einer größeren LeuchtenEinheit handeln. Das Flurförderzeug ist insbesondere ein elektrisch angetriebenes Flurförderzeug. Die genannten Merkmale betreffen vorteilhaft alle Ausführungsformen.

Die Aufgabe wird ferner gelöst durch ein Logistiksystem mit zumindest einem Ladegerät und einem elektrisch angetriebenen Flurförderzeug mit einer Beleuchtungseinrichtung, umfassend eine Fahrzeugleuchte und eine Steuereinheit zum Ansteuern der Fahrzeugleuchte, wobei dieses Logistiksystem dadurch fortgebildet ist, dass die Steuereinheit dazu eingerichtet ist, zumindest einen Zustandsparameter des Ladegeräts zu erfassen und die Fahrzeugleuchte in einem auf dem zumindest einen Zustandsparameter des Ladegeräts basierenden Muster anzusteuern.

Es treffen auf dieses Logistiksystem gleiche oder ähnliche Vorteile sowie gleiche und ähnliche Fortbildungsoptionen zu, wie sie bereits im Hinblick auf das Flurförderzeug selbst zuvor erwähnt wurden. Einziger Unterschied ist, dass es sich nicht um einen Zustandsparameter des Flurförderzeugs, sondern um einen Zustandsparameter des Ladegeräts handelt.

Gemäß einer weiteren Ausführungsform ist dieses Logistiksystem fortgebildet durch einen Zentralrechner, welcher auch als funktionale Einheit in einer Cloud implementiert werden kann, wobei der Zentralrechner dazu eingerichtet ist, den Zustandsparameter des Ladegeräts abzufragen und an das Flurförderzeug zu kommunizieren. Gemäß einer weiteren Ausführungsform kann das Flurförderzeug den Zustandsparameter des Ladegeräts bei dem Zentralrechner abfragen. Mit anderen Worten muss also die Kommunikation des Zustandsparameters des Ladegeräts nicht direkt zwischen dem Ladegerät und dem Flurförderzeug erfolgen, sondern erfolgt gemäß der genannten Ausführungsformen insbesondere über den Zentralrechner.

Die Aufgabe wird ferner gelöst durch eine Logistikeinheit, umfassend eine Vergleichseinheit und zumindest ein erstes und ein zweites Flurförderzeug gemäß einem oder mehreren der zuvor genannten Ausführungsformen, wobei das Logistiksystem dadurch fortgebildet ist, dass eine erste Steuereinheit des ersten Flurförderzeugs dazu eingerichtet ist einen ersten internen Fahrzeugzustandsparameter zu erfassen und an die Vergleichseinheit zu übertragen und eine zweite Steuereinheit des zweiten Flurförderzeugs dazu eingerichtet ist einen zweiten internen Fahrzeugzustandsparameter zu erfassen und an die Vergleichseinheit zu übertragen, wobei die Vergleichseinheit dazu eingerichtet ist den ersten und den zweiten Fahrzeugzustandsparameter miteinander zu vergleichen, ein Vergleichsergebnis zu erzeugen und ein erstes und ein zweites Steuersignal zu generieren, wobei das erste Steuersignal ein Verhältnis des ersten Fahrzeugzustandsparameters zu dem Vergleichsergebnis kennzeichnet und das zweite Steuersignal ein Verhältnis des zweiten Fahrzeugzustandsparameters zu dem Vergleichsergebnis kennzeichnet, und wobei die Vergleichseinheit ferner dazu eingerichtet ist das erste Steuersignal an die erste Steuereinheit zu übertragen und das zweite Steuersignal an die zweite Steuereinheit zu übertragen, wobei die erste Steuereinheit dazu eingerichtet ist eine erste Fahrzeugleuchte des ersten Flurförderzeugs in einem auf dem ersten Steuersignal basierenden ersten Muster anzusteuern und die zweite Steuereinheit dazu eingerichtet ist eine zweite Fahrzeugleuchte des zweiten Flurförderzeugs in einem auf dem zweiten Steuersignal basierenden zweiten Muster anzusteuern.

In einem solchen Logistiksystem ist es möglich, die Flurförderzeuge der Flotte anhand der von ihren Fahrzeugleuchten angezeigten Lichtsignale im Hinblick auf verschiedene Fahrzeugzustandsparameter zu kategorisieren bzw. zu identifizieren. Beispielsweise kann das Flurförderzeug mit dem höchsten Ladezustand der Traktionsbatterie angezeigt werden, beispielsweise durch ein grün blinkendes Lichtzeichen. Es kann ebenso angezeigt werden, dass ein einzelnes Flurförderzeug nicht betriebsbereit oder gesperrt ist oder dass ein Systemfehler an diesem Flurförderzeug vorliegt, so dass sich ein Servicetechniker diesem Flurförderzeug direkt zuwenden kann. Die Anzeige dieser Fahrzeugzustandsparameter im Vergleich zu den Fahrzeugzustandsparametern weiterer Flurförderzeuge der Flotte, erlaubt eine effiziente Nutzung der Fahrzeugflotte.

Der zu diesem Zweck durchgeführte Vergleich der Fahrzeugzustandsparameter erfolgt in der Vergleichseinheit. Diese Vergleichseinheit kann an verschiedenen Orten des Logistiksystems implementiert sein. Gemäß einer Ausführungsform ist beispielsweise vorgesehen, dass das Logistiksystem einen Zentralrechner umfasst, der wiederum die Vergleichseinheit umfasst. Zum Zweck der Datenkommunikation ist der Zentralrechner datentechnisch mit dem ersten und dem zweiten Flurförderzeug gekoppelt. Der Zentralrechner kann in einer Cloud implementiert sein, gleiches gilt für die Vergleichseinheit. Über entsprechende datentechnische Verbindungen können die Vergleichseinheit und/oder der Zentralrechner mit den einzelnen Flurförderzeugen kommunizieren.

Nachdem ein entsprechender Vergleich der Fahrzeugzustandsparameter in der Vergleichseinheit des Zentralrechners durchgeführt wurde, werden entsprechende Steuersignale an die Flurförderzeuge kommuniziert. Auf der Grundlage dieser Steuersignale nehmen die Flurförderzeuge wiederum eine Ansteuerung der entsprechenden Fahrzeugleuchte oder -leuchten vor.

Außer diesem von einer übergeordneten Instanz durchgeführten Vergleich ist ferner vorgesehen, dass die Vergleichseinheit in dem ersten oder dem zweiten Flurförderzeug angeordnet ist, und die Flurförderzeuge datentechnisch direkt miteinander gekoppelt sind. Alternativ können die Flurförderzeuge über die zentrale Instanz, also beispielsweise einen Steuerrechner des Logistiksystems, miteinander kommunizieren. Im Fall der direkten Kommunikation kann jedoch vorteilhaft auf die übergeordnete Instanz, wie beispielsweise den Zentralrechner des Logistiksystems, für die angestrebte Funktionalität der Flurförderzeuge verzichtet werden. Die Vergleichseinheit ist beispielsweise als funktionelle Einheit in der Fahrzeugsteuerung des Flurförderzeugs implementiert.

Neben der Implementierung der Vergleichseinheit in dem übergeordneten Zentralrechner oder in einem der Flurförderzeuge ist es auch möglich, die Vergleichseinheit in einem oder mehreren Ladegeräten zu implementieren, die während eines Ladevorgangs mit den Flurförderzeugen verbunden oder gekoppelt werden.

Gemäß einer solchen Ausführungsform ist das Logistiksystem durch ein erstes und ein zweites Ladegerät fortgebildet, wobei das erste Ladegerät zum Aufladen einer Traktionsbatterie des ersten Flurförderzeugs mit dem ersten Flurförderzeug verbunden ist und das zweite Ladegerät zum Aufladen einer Traktionsbatterie des zweiten Flurförderzeugs mit dem zweiten Flurförderzeug verbunden ist, wobei die Vergleichseinheit in dem ersten oder dem zweiten Ladegerät angeordnet ist, und wobei das erste und das zweite Ladegerät, das erste Ladegerät und das erste Flurförderzeug und das zweite Ladegerät und das zweite Flurförderzeug datentechnisch miteinander gekoppelt sind.

Die Implementierung der Vergleichseinheit erfolgt vorteilhaft in Abhängigkeit der Architektur des Logistiksystems. Jeder der genannten Orte hat in Abhängigkeit der gewünschten Funktionalität und des Aufbaus bzw. der Architektur des Logistiksystems individuelle Vorteile. Werden beispielsweise die Ladegeräte eines Logistiksystems auf einen aktuellen technischen Stand gebracht und daher erneuert, ist es vorteilhaft, die Vergleichseinheit direkt in den neuen Ladegeräten vorzusehen und nicht jedes einzelne Flurförderzeug funktionell entsprechend mit einer Vergleichseinheit auszustatten. Die Implementierung der Vergleichseinheit in einem Zentralrechner erfordert einen vergleichsweise geringen Aufwand, setzt jedoch die Kommunikationsfähigkeit der Flurförderzeuge mit diesem Zentralrechner voraus.

Die Aufgabe wird ferner gelöst durch ein Verfahren zum Betrieb einer Beleuchtungseinrichtung eines Flurförderzeugs, wobei die Beleuchtungseinrichtung zumindest eine Fahrzeugleuchte und eine Steuereinheit zum Ansteuern der Fahrzeugleuchte umfasst, wobei dieses Verfahren dadurch fortgebildet ist, dass die Steuereinheit zumindest einen Fahrzeugzustandsparameter erfasst und die Fahrzeugleuchte in einem auf dem zumindest einen Fahrzeugzustandsparameter basierenden Muster ansteuert.

Auf das Verfahren zum Betrieb der Beleuchtungseinrichtung des Flurförderzeugs treffen gleiche oder ähnliche Vorteile zu, wie sie bereits im Hinblick auf das Flurförderzeug sowie das Logistiksystem erwähnt wurden, so dass auf Wiederholungen verzichtet werden soll.

Vorteilhaft ist das Verfahren dadurch fortgebildet, dass die Steuereinheit ferner ein Näherungssignal erfasst und in Reaktion auf eine erfolgreiche Erfassung des Näherungssignals eine Ansteuerung der Fahrzeugleuchte aktiviert.

Die Erfassung eines Näherungssignals ist vorteilhaft, da die Flurförderzeuge bei der Annäherung einer Person, beispielsweise eines Servicemitarbeiters oder eines Logistikmitarbeiters, direkt ein Lichtzeichen anzeigen können, welche auf einen Fahrzeugparameter hinweist. Beispielsweise kann bei Annäherung eines Servicemitarbeiters dasjenige Flurförderzeug ein entsprechendes Lichtzeichen abgeben, dessen Fahrzeugparameter ein Servicebedürfnis anzeigt. Ebenso können beispielsweise ein oder mehrere Flurförderzeuge Lichtzeichen abgeben, welche den jeweiligen Ladezustand der Traktionsbatterie anzeigen, wenn sich ein Logistikmitarbeiter nähert. Die Übertragung des Näherungssignals erfolgt beispielsweise mittels Bluetooth, WLAN oder einer anderen für die drahtlose Datenkommunikation über kurze Distanzen geeigneten Kommunikationstechnik.

Gemäß einer weiteren Ausführungsform ist vorgesehen, dass das Näherungssignal in einem Logistiksystem erzeugt wird, wobei innerhalb des Logistiksystems verschiedene Zonen definiert sind, welchen unterschiedliche Funktionen zugeordnet sind. Beispielsweise können innerhalb des Logistiksystems Zonen mit Geschwindigkeitsbegrenzungen, Warnzonen, Hinderniszonen und dergleichen definiert sein.

Es kann ebenso eine Abstellzone für Flurförderzeuge definiert sein, beispielsweise auch in Kombination mit einer Ladezone. Stellt das Logistiksystem fest, dass ein Mitarbeiter eine solche Zone, beispielsweise die Ladezone, betritt, so erzeugt das Logistiksystem ein Näherungssignal. Dieses kann von der Steuereinheit des Flurförderzeugs empfangen werden. Mit anderen Worten kann also das Näherungssignal direkt in dem betreffenden Flurförderzeug aufgrund der Annäherung, beispielsweise eines Logistikmitarbeiters, an dieses Flurförderzeug, erzeugt werden. Alternativ oder zusätzlich wird das Näherungssignal erzeugt, wenn in einem Zentralrechner festgestellt wird, dass eine Person eine entsprechende Zone betreten hat. Um die Annäherung bzw. den Zoneneintritt der Person zu detektieren, trägt diese beispielsweise ein mobiles Benutzerendgerät, einen Tag oder ein anderes mit geeigneter Kommunikationstechnik ausgestattetes Gerät bei sich.

Gemäß einer weiteren Ausführungsform ist das Verfahren dadurch fortgebildet, dass der Fahrzeugzustandsparameter ein Ausstattungsmerkmal des Flurförderzeugs, ein Ladezustand einer Traktionsbatterie des Flurförderzeugs, eine Betriebsbereitschaft des Flurförderzeugs und/oder ein Servicebedürfnis des Flurförderzeugs ist.

Gemäß einer weiteren Ausführungsform ist vorgesehen, dass der Fahrzeugzustandsparameter mit mehreren Berechtigungskategorien verknüpft ist und das Näherungssignal eine Information betreffend eine Berechtigungskategorie umfasst und wobei in Reaktion auf eine erfolgreiche Erfassung des Näherungssignals die Berechtigungskategorie des Fahrzeugzustandsparameters und die Berechtigungskategorie des Näherungssignals verglichen werden und eine Ansteuerung der Fahrzeugleuchte in Abhängigkeit eines Vergleichsergebnisses vorgenommen wird.

Gemäß einer weiteren vorteilhaften Ausführungsform ist ferner vorgesehen, dass der Fahrzeugzustandsparameter ein interner Fahrzeugzustandsparameter ist und das Muster einen Wert des Fahrzeugzustandsparameters charakterisiert.

Ferner ist gemäß einer vorteilhaften Ausführungsform das Verfahren dadurch fortgebildet, dass der Fahrzeugzustandsparameter ein interner Fahrzeugzustandsparameter ist und die Steuereinheit den internen Fahrzeugzustandsparameter und zumindest einen Fahrzeugzustandsparameter zumindest eines weiteren Flurförderzeugs als zumindest einen externen Fahrzeugzustandsparameter erfasst, den internen und den zumindest einen externen Fahrzeugzustandsparameter miteinander vergleicht und die Fahrzeugleuchte in einem Muster ansteuert, welches auf einem Ergebnis des Vergleichs der Fahrzeugzustandsparameter basiert.

Mit den oben genannten Ausführungsformen verbundene Vorteile sind ebenfalls im Hinblick auf das Flurförderzeug selbst erläutert worden und sollen daher nicht wiederholt werden.

Ferner wird die Aufgabe gelöst durch ein Verfahren zum Betrieb eines Logistiksystems, umfassend eine Vergleichseinheit und zumindest ein erstes und ein zweites Flurförderzeug nach einem oder mehreren der oben genannten Ausführungsformen, wobei das Verfahren dadurch fortgebildet ist, dass eine erste Steuereinheit des ersten Flurförderzeugs einen ersten internen Fahrzeugzustandsparameter erfasst und an die Vergleichseinheit überträgt und eine zweite Steuereinheit des zweiten Flurförderzeugs einen zweiten internen Fahrzeugzustandsparameter erfasst und an die Vergleichseinheit überträgt, wobei die Vergleichseinheit den ersten und den zweiten Fahrzeugzustandsparameter miteinander vergleicht, ein Vergleichsergebnis erzeugt und ein erstes und ein zweites Steuersignal generiert, wobei das erste Steuersignal ein Verhältnis des ersten Fahrzeugzustandsparameters zu dem Vergleichsergebnis kennzeichnet und das zweite Steuersignal ein Verhältnis des zweiten Fahrzeugzustandsparameters zu dem Vergleichsergebnis kennzeichnet, und wobei die Vergleichseinheit ferner das erste Steuersignal an die erste Steuereinheit überträgt und das zweite Steuersignal an die zweite Steuereinheit überträgt, wobei die erste Steuereinheit eine erste Fahrzeugleuchte des ersten Flurförderzeugs in einem auf dem ersten Steuersignal basierenden ersten Muster ansteuert und die zweite Steuereinheit eine zweite Fahrzeugleuchte des zweiten Flurförderzeugs in einem auf dem zweiten Steuersignal basierenden zweiten Muster ansteuert.

Vorteile betreffend den Betrieb des Logistiksystems sind bereits im Hinblick auf das Logistiksystem selbst erwähnt worden, so dass auf Wiederholungen verzichtet werden soll.

Vorteilhaft ist das Verfahren dadurch fortgebildet, dass das Logistiksystem ein erstes und ein zweites Ladegerät umfasst, wobei das erste Ladegerät zum Aufladen einer Traktionsbatterie des ersten Flurförderzeugs mit dem ersten Flurförderzeug verbunden ist und das zweite Ladegerät zum Aufladen einer Traktionsbatterie des zweiten Flurförderzeugs mit dem zweiten Flurförderzeug verbunden ist, wobei die Vergleichseinheit in dem ersten oder dem zweiten Ladegerät angeordnet ist, und wobei das erste und das zweite Ladegerät, das erste Ladegerät und das erste Flurförderzeug und das zweite Ladegerät und das zweite Flurförderzeug datentechnisch miteinander in Verbindung stehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 bis 3: jeweils ein Flurförderzeug mit einer Beleuchtungseinrichtung in schematischer Darstellung,
- Fig. 4 und 5: jeweils ein Logistiksystem mit mehreren Flurförderzeugen.

In den Zeichnungen sind jeweils gleiche oder gleichartige Elemente und/oder Teile mit denselben Bezugsziffern versehen, so dass von einer erneuten Vorstellung jeweils abgesehen wird.

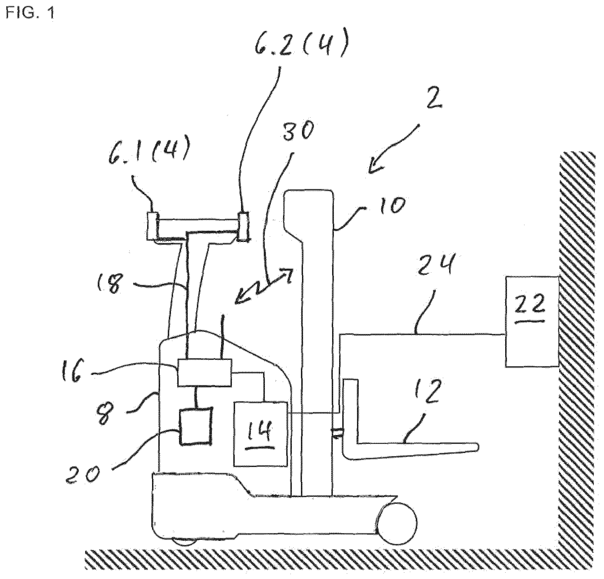

Fig. 1 zeigt in schematisch vereinfachter Ansicht ein Flurförderzeug 2 mit einer Beleuchtungseinrichtung 4, die beispielhaft zwei Fahrzeugleuchten 6.1 und 6.2 umfasst. Allgemein sollen die Fahrzeugleuchten auch mit Bezugszeichen 6 bezeichnet werden. Das Flurförderzeug 2 umfasst eine Karosserie 8, welche auf ein Fahrgestell aufgesetzt ist. Bei dem Flurförderzeug 2 handelt es sich beispielsweise um einen Schubmaststapler. Das Flurförderzeug 2 umfasst die für ein Flurförderzeug typischen Komponenten, wie beispielsweise einen Mast 10 und eine Hubgabel 12. Beispielhaft handelt es sich bei dem Flurförderzeug 2 um ein elektrisch angetriebenes Flurförderzeug 2. Um den nicht dargestellten elektrischen Antrieb mit Energie zu versorgen umfasst das Flurförderzeug 2 eine Traktionsbatterie 14.

Das Flurförderzeug 2 umfasst außerdem eine Steuereinheit 16, welche zum Ansteuern der Fahrzeugleuchten 6 eingerichtet und ausgestattet ist. Die Steuereinheit 16 kann als separate Einheit ausgeführt oder als Teil einer Fahrzeugsteuerung 20 implementiert sein. Zum Ansteuern der Fahrzeugleuchten 6 ist die Steuereinheit 16 über geeignete Verbindungsleitungen 18 mit diesen verbunden.

Die Steuereinheit 16 ist ferner dazu eingerichtet zumindest einen Fahrzeugzustandsparameter des Flurförderzeugs 2 zu erfassen. Der Fahrzeugzustandsparameter wird beispielsweise von der Betriebssteuerung 20 des Flurförderzeugs 2 abgefragt, oder die Steuereinheit 16 fragt den Fahrzeugzustandsparameter bei einer Einheit des Flurförderzeugs 2 ab, in welchem der Fahrzeugzustandsparameter vorliegt. Beispielsweise handelt es sich bei dem Fahrzeugzustandsparameter um einen Ladezustand der Traktionsbatterie 14. Der Ladezustand der Traktionsbatterie 14 kann als Wert in der Fahrzeugsteuerung 20 des Flurförderzeugs vorliegen. Alternativ kann die Steuereinheit 16 den Ladezustand der Traktionsbatterie 14 direkt an der Traktionsbatterie 14 abfragen. Weitere mögliche Fahrzeugzustandsparameter sind beispielsweise ein Ausstattungsmerkmal des Flurförderzeugs 2, eine Betriebsbereitschaft des Flurförderzeugs 2 und/oder ein Servicebedürfnis des Flurförderzeugs 2.

Ein Ausstattungsmerkmal des Flurförderzeugs 2 ist beispielsweise dessen Ausführung als Schubmaststapler oder auch dessen Tragfähigkeit oder maximale Hubhöhe. Weitere Ausstattungsmerkmale können beispielsweise den Typ oder die Bedienung des Flurförderzeugs 2 betreffen. So kann es beispielsweise vorgesehen sein, dass für die Bedienung eines bestimmten Typs eines Flurförderzeugs besondere Qualifikationen erworben werden müssen. Das Ausstattungsmerkmal kann beispielsweise anzeigen, ob eine solche besondere Qualifikation erforderlich ist. Solche Informationen können von der Steuereinheit 16 in der Fahrzeugsteuerung 20 abgefragt werden. Ein weiteres mögliches Ausstattungsmerkmal ist beispielsweise das Vorhandensein eines Assistenzsystems, welches für bestimmte Benutzer vorgeschrieben sein kann, oder umgekehrt, für das der Benutzer eine bestimmte Qualifikation aufweisen muss.

Gleiches gilt auch für diejenigen Ausführungsbeispiele, bei denen der Fahrzeugzustandsparameter eine Betriebsbereitschaft des Flurförderzeugs oder ein Servicebedürfnis des Flurförderzeugs ist. Die Betriebsbereitschaft des Flurförderzeugs 2 kann ebenfalls in der Fahrzeugsteuerung 20 hinterlegt sein. Dabei bezeichnet die Betriebsbereitschaft beispielsweise, ob in der Fahrzeugsteuerung des Flurförderzeugs 2 ein Fehler, ein schwerer Fehler oder eben kein Fehler vorliegt. Auch eine eingeschränkte Betriebsbereitschaft kann in einem einsprechenden Parameter in der Fahrzeugsteuerung 20 hinterlegt sein.

Ein Servicebedürfnis des Flurförderzeugs 2 kann in einem weiteren, ebenfalls beispielsweise in der Fahrzeugsteuerung 20 vorhandenen Parameter, hinterlegt sein. Ein solcher Parameter kann beispielsweise angeben, ob ein dringendes Servicebedürfnis vorliegt oder er kann einen Wert für ein noch verbleibendes Serviceintervall angeben. Ein solcher Parameter kann ebenfalls aus einer Cloud in die Fahrzeugsteuerung 20 des Flurförderzeugs 2 eingespeist werden.

Um die Fahrzeugzustandsparameter wahlweise aus der Traktionsbatterie 14 oder der Fahrzeugsteuerung 20 abzufragen, ist die Steuereinheit 16 sowohl mit der Traktionsbatterie 14 als auch mit der Fahrzeugsteuerung 20 über nicht näher bezeichnete Datenleitungen gekoppelt. Bei diesen handelt es sich beispielsweise um in der Fahrzeugtechnik übliche Kommunikationsverbindungen, beispielsweise um ein Bussystem, wie einen CAN-Bus, DC-Bus, Ethernet oder dergleichen. Die Kommunikation kann digital oder analog erfolgen.

Sobald die Steuereinheit 16 den Fahrzeugzustandsparameter erfasst hat, ist sie in der Lage die Fahrzeugleuchte 6 in einem auf dem Fahrzeugzustandsparameter basierenden Muster anzusteuern. Dabei umfasst der Begriff "Muster" im Kontext der vorliegenden Beschreibung sowohl die Farbe eines von der Fahrzeugleuchte 6 emittierten Lichtzeichens als auch dessen Schaltrhythmus, beispielsweise Dauerlicht, Blinklicht in verschiedenen Rhythmen, etc, als auch dessen Intensität oder Leuchtstärke. Beispielsweise kann die Steuereinheit 16 die Fahrzeugleuchten 6 derart ansteuern, dass diese anhand der Farbe des abgegebenen Lichtzeichens einen Ladezustand der Traktionsbatterie 14 anzeigen. Beispielsweise kann mit grüner Farbe eine volle Traktionsbatterie angezeigt werden (z.B. Ladezustand > 80 %). Eine leere oder nicht ausreichend geladene Traktionsbatterie (z.B. Ladezustand < 20 %) kann mit rotem Lichtzeichen und eine akzeptabel geladene Traktionsbatterie (Ladezustand zwischen 20 % und 80 %) kann mit gelbem Lichtzeichen angezeigt werden. Es kann außerdem beispielsweise die Betriebsbereitschaft des Flurförderzeugs mit grünem Lichtzeichen positiv angezeigt werden und mit rotem Lichtzeichen oder rot blinkendem Lichtzeichen negativ. Auch ist es möglich, die beiden Fahrzeugleuchten 6.1, 6.2 zu unterschiedlichen Zwecken unterschiedlich anzusteuern. Beispielsweise kann die erste Fahrzeugleuchte 6.1 ein Lichtsignal ausgeben, welches Auskunft über den Ladezustand der Traktionsbatterie 14 gibt, während das zweite Lichtzeichen 6.2 ein Lichtsignal aussendet, welches Informationen über die Betriebsbereitschaft des Flurförderzeugs 2 anzeigt.

Die Fahrzeugleuchten 6.1, 6.2 sind in einem oberen Bereich der Karosserie 8 angeordnet. Auf diese Weise sind die Fahrzeugleuchten 6 auch von Ferne gut sichtbar. Die Fahrzeugleuchten 6 befinden sich beispielhaft an einem höchsten Punkt der Karosserie 8 des Flurförderzeugs 2. Der Mast 10 wird in diesem Zusammenhang nicht als Teil der Karosserie des Flurförderzeugs 2 angesehen.

Das Flurförderzeug 2 ist beispielhaft in einer Situation dargestellt, in der dieses mit einem Ladegerät 22 über ein Ladekabel 24 verbunden ist.

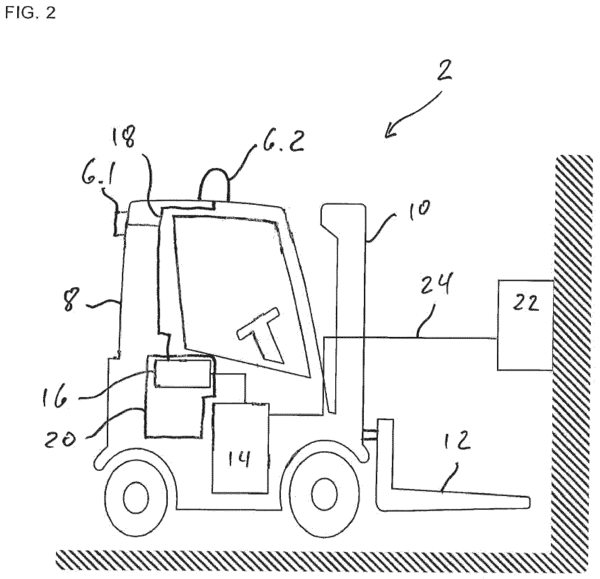

Fig. 2 zeigt eine weitere schematisch vereinfachte Ansicht eines Flurförderzeugs 2, bei dem es sich beispielhaft um einen Gegengewichtsstapler handelt. Die Traktionsbatterie 14 ist beispielsweise eine Blei-Säure-Batterie oder eine Lithium-Ionen-Batterie. Auch das Flurförderzeug in Fig. 2 ist über ein Ladekabel 24 mit einem Ladegerät 22 verbunden. Die Steuereinheit 16 ist beispielhaft als Teil der Fahrzeugsteuerung 20 implementiert. Die erste Fahrzeugleuchte 6.1 des Flurförderzeugs 2 ist in einem oberen Bereich der Karosserie 8, nach hinten leuchtend, angebracht. Als zweite Fahrzeugleuchte 6.2 ist eine auf dem Dach der Karosserie 8 ansonsten auch als Warnleuchte vorgesehene Rundumleuchte vorgesehen. Zur Ansteuerung der Fahrzeugleuchten 6 sind diese mit der Fahrzeugsteuerung 16 über entsprechende Verbindungsleitungen 18 verbunden.

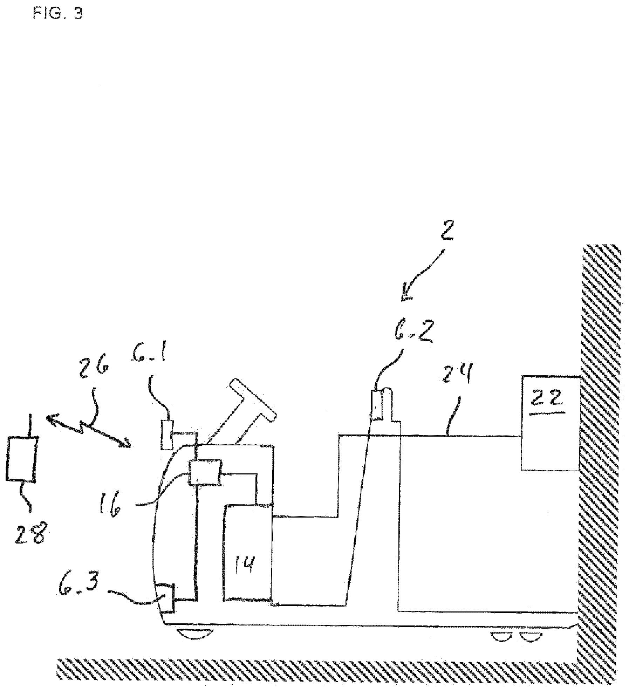

Fig. 3 zeigt ein weiteres Flurförderzeug 2. Beispielhaft handelt es sich um einen Kommissionier oder Elektroschlepper. Das Flurförderzeug 2 ist wiederum ein elektrisch angetriebenes Flurförderzeug und umfasst zu diesem Zweck eine Traktionsbatterie 14. Das Flurförderzeug 2 umfasst beispielhaft eine erste Fahrzeugleuchte 6.1 und eine zweite Fahrzeugleuchte 6.2, welche separat an dem Flurförderzeug 2 angebracht sind. Bei der dritten Fahrzeugleuchte 6.3 handelt es sich beispielhaft um den Frontscheinwerfer des Flurförderzeugs 2. Die dritte Fahrzeugleuchte 6.3 ist also ein Teil der Fahrzeugbeleuchtung des Flurförderzeugs 2. Das Flurförderzeug 2 ist wiederum in einer Situation dargestellt, in der die Traktionsbatterie 14 aufgeladen wird und zu diesem Zweck mit Hilfe eines Ladekabels 24 mit dem Ladegerät 22 verbunden ist.

Die Steuereinheit 16 des Flurförderzeugs 2 ist ferner dazu eingerichtet ein Näherungssignal 26 zu erfassen. In Reaktion auf eine erfolgreiche Erfassung des Näherungssignals 26 wird die Ansteuerung einer oder mehrerer Fahrzeugleuchten 6 aktiviert. Das Näherungssignal 26 wird beispielsweise von einem mobilen Benutzerendgerät 28, welches beispielsweise ein Servicemitarbeiter mitführt, gesendet. Es handelt sich beispielsweise um ein Mobiltelefon, PDA, Tablet oder dergleichen oder auch um einen Tag. Das Benutzerendgerät 28 sowie die Steuereinheit 16 des Flurförderzeugs 2 sind mit entsprechender Kommunikationstechnik für die drahtlose Datenübertragung über kurze Distanzen ausgestattet (beispielsweise WLAN oder Bluetooth), so dass das Näherungssignal 26 übertragen werden kann. Nähert sich ein Benutzer, der das Benutzerendgerät 28 mitführt, dem Flurförderzeug 2, so wird das Näherungssignal 26 übertragen und die Fahrzeugleuchte 6 aktiviert. Der Benutzer erhält Hinweise über den Zustand des Flurförderzeugs 2. Das Näherungssignal 26 kann weitere Informationen enthalten, beispielsweise angeben, zu welchem Fahrzeugparameter die Lichtzeichen Auskunft geben sollen. Beispielsweise kann bereits das Näherungssignal eine Information enthalten, dass ein Ladezustand der Traktionsbatterie 14 angezeigt werden soll.

Gemäß einem weiteren Ausführungsbeispiel ist vorgesehen, dass das Flurförderzeug 2 einen Fahrzeugzustandsparameter aufweist, der mit einer Berechtigungskategorie verknüpft ist. Auch das Näherungssignal 26 ist mit einer Information betreffend eine Berechtigungskategorie verknüpft. Die Steuereinheit 16 ist dazu eingerichtet, in Reaktion auf eine erfolgreiche Erfassung des Näherungssignals 26 die Berechtigungskategorie des Fahrzeugzustandsparameters und die Berechtigungskategorie des Näherungssignals 26 zu vergleichen. In Abhängigkeit des Ergebnisses dieses Vergleichs wird anschließend eine Ansteuerung der Fahrzeugleuchte 6 vorgenommen.

Beispielsweise handelt es sich bei dem Fahrzeugzustandsparameter um ein Servicebedürfnis des Flurförderzeugs 2. In der zugehörigen Berechtigungskategorie, die mit diesem Fahrzeugzustandsparameter verknüpft ist, wäre beispielsweise hinterlegt, ob ein Serviceauftrag vorliegt oder nicht. Nähert sich nun ein Servicemitarbeiter dem entsprechenden Flurförderzeug 2, so ist dessen Benutzerendgerät 28 dazu eingerichtet, ein Näherungssignal 26 auszusenden, welches mit einer betreffenden Berechtigungskategorie verknüpft ist, in diesem Fall der Berechtigungskategorie "Servicemitarbeiter". Der Vergleich, der innerhalb des Flurförderzeugs 2 anhand der Berechtigungskategorie des Näherungssignals 26 und des Fahrzeugzustandsparameters nun vorgenommen wird, fällt positiv aus, denn es liegt ein entsprechender Serviceauftrag vor und das Näherungssignal 26 identifiziert den Mitarbeiter als Servicemitarbeiter. Dementsprechend kann die Steuereinheit 16 dazu eingerichtet sein, beispielsweise ein grünes Lichtsignal an der Fahrzeugleuchte 6 auszugeben, welches dem Servicemitarbeiter anzeigt, dass dieses das betreffende, für den Service vorgesehene Flurförderzeug 2 ist. Gleichzeitig kann vorgesehen sein, dass die Steuereinheit 16 das Flurförderzeug 2 für die weitere Benutzung sperrt.

Gemäß der zuvor erläuterten Ausführungsformen ist der Fahrzeugzustandsparameter stets ein interner Fahrzeugzustandsparameter, der Auskunft über einen Zustand des fraglichen Flurförderzeugs 2 selbst anzeigt.

Die Steuereinheit 16 der in den Fig. 1 bis 3 erläuterten Flurförderzeuge 2 kann gemäß weiterer Ausführungsformen ferner dazu eingerichtet sein, nicht nur einen internen Fahrzeugzustandsparameter, beispielsweise aus der Fahrzeugsteuerung 20 des Flurförderzeugs 2 abzufragen und somit zu erfassen, sondern zusätzlich auch zumindest einen weiteren externen Fahrzeugzustandsparameter zu erfassen. Der externe Fahrzeugzustandsparameter wird beispielsweise über eine drahtlose Datenverbindung 30 (vgl. Fig. 1) an die Steuereinheit des Flurförderzeugs 2 übertragen. Es ist ebenso denkbar, dass die Datenübertragung über das Ladekabel 24, ausgehend von dem Ladegerät 22 und über die Traktionsbatterie 14, erfolgt. Der externe Fahrzeugzustandsparameter kennzeichnet einen Fahrzeugzustand eines weiteren Flurförderzeugs 2. Die Steuereinheit 16 ist dazu eingerichtet, den internen und den zumindest einen externen Fahrzeugzustandsparameter miteinander zu vergleichen. Die Fahrzeugleuchte 6 wird gemäß einem solchen Ausführungsbeispiel anschließend in einem Muster angesteuert, welches auf einem Ergebnis des Vergleichs der beiden Fahrzeugzustandsparameter basiert.

Beispielsweise bekommt das Flurförderzeug 2 als externen Fahrzeugzustandsparameter den Ladezustand der Traktionsbatterie 14 eines weiteren Flurförderzeugs 2 übersandt. Die Steuereinheit 16 vergleicht anschließend diesen externen Ladezustand mit dem Ladezustand der eigenen Traktionsbatterie 14, dem internen Ladezustand. Ist der interne Ladezustand höher als der externe Ladezustand, so kann die Fahrzeugleuchte 6 ein entsprechendes Lichtzeichen abgeben, beispielsweise grün blinken. Außerdem kann eine entsprechende Information über das Ergebnis des Vergleichs an das weitere Flurförderzeug 2 zurückgemeldet werden. Dies erfolgt ebenfalls beispielsweise über die drahtlose Datenverbindung 30. Das weitere Flurförderzeug 2, welches diese Information empfängt, kann nun derart eingerichtet sein, dass dessen Steuereinheit 16 entsprechend dem Ergebnis des Vergleichs die Fahrzeugleuchte 6 mit gelber oder roter Farbe ansteuert, was darauf hinweisen soll, dass der Ladezustand der Traktionsbatterie 14 dieses Flurförderzeugs 2 geringer ist als der Ladezustand eines anderen Flurförderzeugs 2. Ein Benutzer, der sich diesen beiden Flurförderzeugen 2 nähert, kann somit einfach und auf den ersten Blick erkennen, welches der beiden Flurförderzeuge 2 die Traktionsbatterie 14 mit dem besseren Ladezustand besitzt, und dieses Flurförderzeug 2 in Betrieb nehmen, während das andere Flurförderzeug 2 noch weiter aufgeladen werden kann.

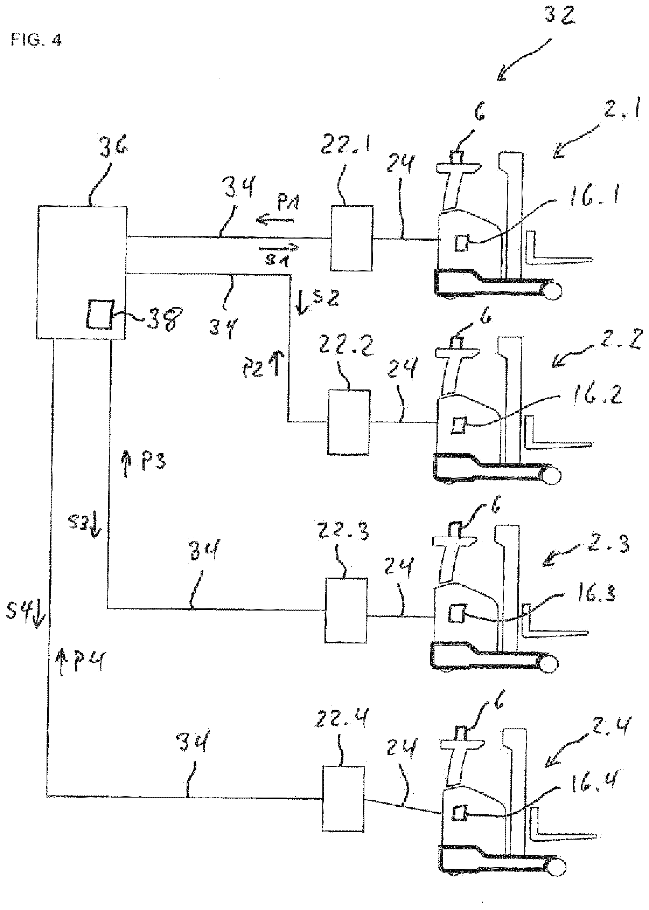

Fig. 4 zeigt ein Logistiksystem 32 in schematisch vereinfachter Darstellung. Das Logistiksystem 32 umfasst mehrere Flurförderzeuge 2, beispielhaft sind vier Flurförderzeuge 2.1 bis 2.4 dargestellt. Jedes der Flurförderzeuge, welche nach wie vor allgemein auch mit Bezugszeichen 2 bezeichnet werden, kann so ausgestaltet sein, wie es im Zusammenhang mit den Fig. 1 bis 3 erläutert ist. Die Flurförderzeuge 2.1..2.4 sind jeweils über ein entsprechendes Ladekabel 24 mit einem Ladegerät 22.1 bis 22.4 verbunden. Die Ladegeräte 22.1..22.4 wiederum sind über geeignete Datenleitungen 34 mit einem Zentralrechner 36 des Logistiksystems 32 gekoppelt.

Der Zentralrechner 36 umfasst eine Vergleichseinheit 38. Das erste Flurförderzeug 2.1 umfasst eine erste Steuereinheit 16.1, die dazu eingerichtet ist einen ersten internen Fahrzeugzustandsparameter P1 des ersten Flurförderzeugs 2.1 zu erfassen und an die Vergleichseinheit 38 zu übertragen. Die Datenübertragung erfolgt beispielhaft über das erste Ladegerät 22.1. Sie kann alternativ auch über eine direkte Datenverbindung zwischen dem ersten Flurförderzeug 2.1 und dem Zentralrechner 36 erfolgen. Das zweite Flurförderzeug 2.2 umfasst eine zweite Steuereinheit 16.2, die dazu eingerichtet ist, einen zweiten internen Fahrzeugzustandsparameter P2 zu erfassen. Auch das zweite Flurförderzeug 2.2 überträgt den Fahrzeugzustandsparameter P2 an die Vergleichseinheit 38, wobei in Bezug auf die Datenübertragung das bereits zum ersten Flurförderzeug 2.1 Gesagte gilt.

Die Vergleichseinheit 38 ist dazu eingerichtet, den ersten und den zweiten Fahrzeugzustandsparameter P1, P2 miteinander zu vergleichen. Bei den Fahrzeugzustandsparametern P1, P2 kann es sich beispielsweise um einen Ladezustand der jeweiligen Traktionsbatterie 14 des Flurförderzeugs 2.1, 2.2 oder auch einen beliebigen anderen Fahrzeugzustandsparameter handeln. Die Vergleichseinheit 38 erzeugt ein Vergleichsergebnis und generiert ein erstes und ein zweites Steuersignal S1 bzw. S2. Das erste Steuersignal S1 kennzeichnet ein Verhältnis des ersten Fahrzeugzustandsparameters P1 zu dem Vergleichsergebnis. Das zweite Steuersignal S2 kennzeichnet ein Verhältnis des zweiten Fahrzeugzustandsparameters P2 zu dem Vergleichsergebnis. Handelt es sich bei den Fahrzeugzustandsparameter P1, P2 beispielsweise um den Ladezustand der Traktionsbatterie 14, so wird als Vergleichsergebnis beispielsweise der maximale Ladezustand ermittelt. Beträgt beispielsweise der Ladezustand der Traktionsbatterie 14 des ersten Flurförderzeugs 2.1 80 % und der Ladezustand der Traktionsbatterie 14 des zweiten Flurförderzeugs 2.2 60 %, so wäre das Vergleichsergebnis 80 %. Die einzelnen Fahrzeugzustandsparameter P1, P2 werden nun ins Verhältnis zu diesem Vergleichsergebnis gesetzt. Der zweite Fahrzeugzustandsparameter (60 % Ladezustand) ist kleiner als das Vergleichsergebnis (80 % Ladezustand). Dementsprechend könnte als zweites Steuersignal S2 beispielsweise eine Information betreffend die Anzeige eines roten Lichtsignals generiert werden. Das erste Steuersignal S1 hingegen, würde ein grünes Lichtzeichen erzeugen, da der Ladezustand der Traktionsbatterie 14 des ersten Flurförderzeugs 2.1 dem Höchstwert entspricht. Die Vergleichseinheit 38 ist dazu eingerichtet, das erste Steuersignal S1 an die erste Steuereinheit 16.1 des ersten Flurförderzeugs 2.1 zu übertragen. Ebenso wird das zweite Steuersignal S2 an die zweite Steuereinheit 16.2 des zweiten Flurförderzeugs 2.2 übertragen. Wiederum kann die Datenkommunikation über die betreffenden Ladegeräte 22.1 bzw. 22.2 erfolgen. Es kann auch eine direkte beispielsweise drahtlose Kommunikation zwischen dem Zentralrechner 36 und den Flurförderzeugen 2.1, 2.2 bzw. deren Steuereinheiten 16.1, 16.2 vorgesehen sein.

Die erste Steuereinheit 16.1 des ersten Flurförderzeugs 2.1 ist nun dazu eingerichtet, eine Fahrzeugleuchte 6 des ersten Flurförderzeugs in einem ersten Muster anzusteuern. Dieses erste Muster ist beispielsweise ein grünes Licht und basiert auf dem ersten Steuersignal S1. Die zweite Steuereinheit 16.2 des zweiten Flurförderzeugs 2.2 ist dazu eingerichtet, die Fahrzeugleuchte 6 dieses Flurförderzeugs in einem auf dem zweiten Steuersignal S2 basierenden zweiten Muster anzusteuern. Dies wäre beispielsweise die Wiedergabe eines roten Lichtsignals.

Die oben beispielhaft für das erste und das zweite Flurförderzeug 2.1, 2.2 erläuterte Vergleich kann ebenso unter Bezugnahme auf mehrere Fahrzeugzustandsparameter, beispielsweise eines dritten Fahrzeugzustandsparameters P3 des dritten Flurförderzeugs 2.3 mit einem vierten Fahrzeugzustandsparameter P4 des vierten Flurförderzeugs 2.4 durchgeführt werden. Die Vergleichseinheit 38 führt in einem solchen Fall einen Vergleich nicht nur zwischen einem ersten und einem zweiten Fahrzeugzustandsparameter P1, P2, sondern zwischen mehreren Fahrzeugzustandsparametern, beispielsweise den vier Fahrzeugzustandsparametern P1 bis P4 der vier Flurförderzeug 2.1 bis 2.4, durch. Wiederum wird ein Vergleichsergebnis ermittelt und die einzelnen Fahrzeugzustandsparameter P1 .. P4 werden ins Verhältnis zu dem ermittelten Vergleichsergebnis besetzt. Basierend auf diesen Vergleich werden Steuersignale S1..S4 erzeugt und anschließend erzeugen die jeweiligen Steuereinheiten 16.1..16.4 der Flurförderzeuge 2.1..2.4 an den jeweiligen Fahrzeugleuchten 6 entsprechende Lichtsignale. Beispielsweise wird die Fahrzeugleuchte 6 desjenigen Flurförderzeugs grün leuchten, welches den höchsten Ladezustand der Traktionsbatterie 14 aufweist.

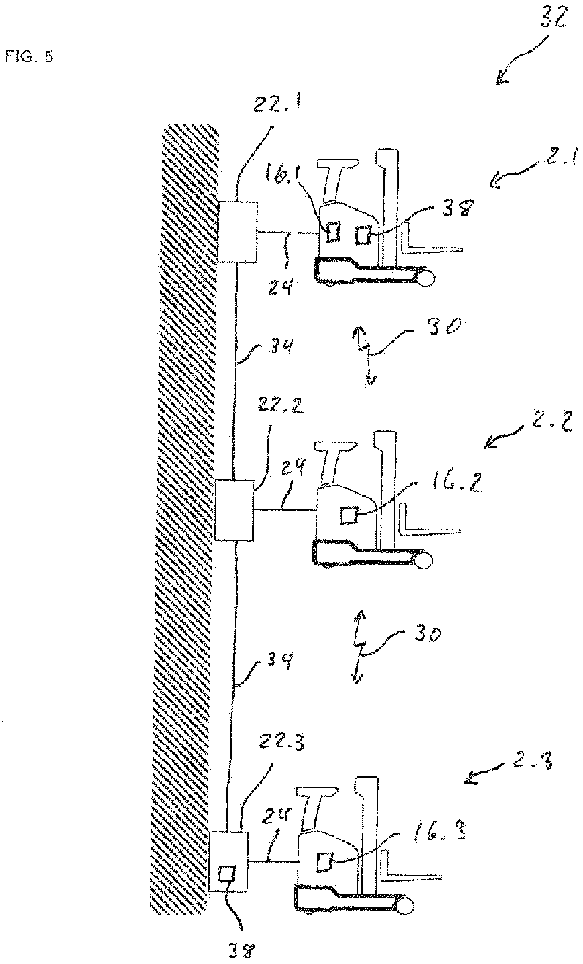

Fig. 5 zeigt ein weiteres Logistiksystem 32, beispielhaft umfassend drei Flurförderzeuge 2.1..2.3. Abweichend von dem im Zusammenhang mit Fig. 4 erläuterten Logistiksystem 32 weist das in Fig. 5 dargestellte Logistiksystem 32 keinen Zentralrechner 36 auf. Die Vergleichseinheit 38 befindet sich stattdessen in einem der Flurförderzeuge 2.1..2.3, beispielhaft in dem ersten Flurförderzeug 2.1. Die Vergleichseinheit 38 kann als Teil der Fahrzeugsteuerung 20 dieses Flurförderzeugs 2.1 oder auch als Teil der ersten Steuereinheit 16.1 des Flurförderzeugs 2.1 implementiert sein. Damit die im Zusammenhang mit der Verarbeitung mehrerer Fahrzeugzustandsparameter erforderliche Kommunikation der Fahrzeugzustandsparameter P1..P3 und der Steuersignale S1..S3 stattfinden kann, sind die Flurförderzeuge 2.1..2.3 direkt über drahtlose Datenverbindungen 30 miteinander gekoppelt, so dass alle Flurförderzeuge 2.1..2.3 miteinander kommunizieren können. Gemäß einer weiteren Ausführungsform ist vorgesehen, dass die Vergleichseinheit 38 in einem der Ladegeräte 22.1..22.3 implementiert ist. Beispielhaft ist dies für das dritte Ladegerät 22.3 dargestellt. Damit, wie bereits erwähnt, der erforderliche Datenaustausch stattfinden kann, sind die Ladegeräte 22.1..22.3 durch geeignete Datenleitungen 34 miteinander verbunden, so dass die Fahrzeugzustandsparameter P1..P3 über die Ladegeräte 22.1..22.3, ausgehend von den Flurförderzeugen 2.1..2.3, zu der Vergleichseinheit 38 gelangen können. In umgekehrter Richtung erfolgt die Kommunikation der Steuersignale S1 ..S3 ausgehend von der Vergleichseinheit 38 wiederum über die Ladegeräte 22.1..22.3 in die Flurförderzeuge2.1..2.3 bzw. zu deren Steuereinheiten 16.1 .. 16.3.

Das Logistiksystem 32 ist gemäß einem weiteren Ausführungsbeispiel derart eingerichtet, dass es zumindest ein Ladegerät 22 und ein elektrisch angetriebenes Flurförderzeug 2 umfasst. Das Flurförderzeug 2 umfasst eine Beleuchtungseinrichtung 4, die wiederum zumindest eine Fahrzeugleuchte 6 umfasst. Außerdem umfasst das Flurförderzeug eine Steuereinheit 16 zum Ansteuern der Fahrzeugleuchte 6. Die Steuereinheit 16 des Flurförderzeugs 2 ist dazu eingerichtet, zumindest einen Zustandsparameter des Ladegeräts 22 zu erfassen und die Fahrzeugleuchte 6 in einem auf dem zumindest einen Zustandsparameter des Ladegeräts 22 basierenden Muster anzusteuern. Beispielsweise kann der Zustandsparameter des Ladegeräts 22 Auskunft über dessen Leistungsfähigkeit, Betriebsbereitschaft oder auch ein Servicebedürfnis anzeigen. Zuvor im Hinblick auf das Flurförderzeug 2 erläuterte Ausführungsbeispiele treffen auf ein solches Logistiksystem 32 in gleicher Weise zu, wobei der Zustandsparameter des Flurförderzeugs 2 lediglich durch den Zustandsparameter des Ladegeräts 22 zu ersetzen ist. Gemäß einer weiteren Ausführungsform ist vorgesehen, dass der Zustandsparameter des Ladegeräts 22 nicht direkt zwischen dem Flurförderzeug 2 und dem Ladegerät 22 ausgetauscht wird. Zu diesem Zweck umfasst das Logistiksystem 32 einen Zentralrechner 36, der ebenso in einer Cloud implementiert sein kann. Der Zentralrechner 36 fragt beispielsweise den Zustandsparameter des Ladegeräts 22 bei dem Ladegerät 22 ab und kommuniziert diesen an das Flurförderzeug 2. Ebenso kann vorgesehen sein, dass das Flurförderzeug 2 den Zustandsparameter des Ladegeräts 22 bei dem Zentralrechner 36 abfragt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2, 2.1 .. 2.4: Flurförderzeug
- 4: Beleuchtungseinrichtung
- 6, 6.1, 6.2: Fahrzeugleuchten
- 8: Karosserie
- 10: Mast
- 12: Hubgabel
- 14: Traktionsbatterie
- 16, 16.1 .. 16.4: Steuereinheit
- 18: Verbindungsleitung
- 20: Fahrzeugsteuerung
- 22, 22.1 .. 22.4: Ladegerät
- 24: Ladekabel
- 26: Näherungssignal
- 28: Benutzerendgerät
- 30: drahtlose Datenverbindung
- 32: Logistiksystem
- 34: Datenleitung
- 36: Zentralrechner
- 38: Vergleichseinheit

- P1: erster Fahrzeugzustandsparameter
- P2: zweiter Fahrzeugzustandsparameter
- S1: erstes Steuersignal
- S2: zweites Steuersignal

## Patentansprüche

1. Flurförderzeug (2) mit einer Beleuchtungseinrichtung (4), umfassend zumindest eine Fahrzeugleuchte (6) und eine Steuereinheit (16) zum Ansteuern der Fahrzeugleuchte (6), **dadurch gekennzeichnet, dass** die Steuereinheit (16) dazu eingerichtet ist zumindest einen Fahrzeugzustandsparameter zu erfassen und die Fahrzeugleuchte (6) in einem auf dem zumindest einen Fahrzeugzustandsparameter basierenden Muster anzusteuern.

2. Flurförderzeug (2) nach Anspruch 1, **dadurch gekennzeichnet, dass** die zumindest eine Fahrzeugleuchte (6) in einer oberen Hälfte, insbesondere in einem oberen Drittel, ferner insbesondere in einem oberen Viertel einer Karosserie (8) des Flurförderzeugs (2) angeordnet ist.

3. Flurförderzeug (2) nach einem der vorhergehenden Ansprüche, **dadurch gekennzeichnet, dass** die Fahrzeugleuchte (6.3) ein Teil einer Fahrzeugbeleuchtung des Flurförderzeugs (2) ist.

4. Flurförderzeug (2) nach einem der vorhergehenden Ansprüche, **dadurch gekennzeichnet, dass** die Steuereinheit (16) ferner dazu eingerichtet ist, ein Näherungssignal (26) zu erfassen und in Reaktion auf eine erfolgreiche Erfassung des Näherungssignals (26) eine Ansteuerung der Fahrzeugleuchte (6) zu aktivieren.

5. Flurförderzeug (2) nach einem der vorhergehenden Ansprüche, **dadurch gekennzeichnet, dass** der Fahrzeugzustandsparameter ein Ausstattungsmerkmal des Flurförderzeugs (2), ein Ladezustand einer Traktionsbatterie (14) des Flurförderzeugs (2), eine Betriebsbereitschaft des Flurförderzeugs (2) und/oder ein Servicebedürfnis des Flurförderzeugs (2) ist,
wobei insbesondere der Fahrzeugzustandsparameter mit mehreren Berechtigungskategorien verknüpft ist und das Näherungssignal (26) eine Information betreffend eine Berechtigungskategorie umfasst und wobei die Steuereinheit (16) ferner dazu eingerichtet ist in Reaktion auf eine erfolgreiche Erfassung des Näherungssignals (26) die Berechtigungskategorie des Fahrzeugzustandsparameters und die Berechtigungskategorie des Näherungssignals (26) zu vergleichen und eine Ansteuerung der Fahrzeugleuchte (6) in Abhängigkeit eines Vergleichsergebnisses vorzunehmen.

6. Flurförderzeug (2) nach einem der vorhergehenden Ansprüche, **dadurch gekennzeichnet, dass** der Fahrzeugzustandsparameter ein interner Fahrzeugzustandsparameter ist und das Muster einen Wert des Fahrzeugzustandsparameters charakterisiert.

7. Flurförderzeug (2) nach einem der Ansprüche 1 bis 5, **dadurch gekennzeichnet, dass** der Fahrzeugzustandsparameter ein interner Fahrzeugzustandsparameter ist und die Steuereinheit (16) dazu eingerichtet ist den internen Fahrzeugzustandsparameter und zumindest einen Fahrzeugzustandsparameter zumindest eines weiteren Flurförderzeugs als zumindest einen externen Fahrzeugzustandsparameter zu erfassen, den internen und den zumindest einen externen Fahrzeugzustandsparameter miteinander zu vergleichen und die Fahrzeugleuchte (6) in einem Muster anzusteuern, welches auf einem Ergebnis des Vergleichs der Fahrzeugzustandsparameter basiert.

8. Logistiksystem (32) mit zumindest einem Ladegerät (22) und einem elektrisch angetriebenen Flurförderzeug (2) mit einer Beleuchtungseinrichtung (4), umfassend zumindest eine Fahrzeugleuchte (6) und eine Steuereinheit (16) zum Ansteuern der Fahrzeugleuchte (6), **dadurch gekennzeichnet, dass** die Steuereinheit (16) dazu eingerichtet ist zumindest einen Zustandsparameter des Ladegeräts (22) zu erfassen und die Fahrzeugleuchte (6) in einem auf dem zumindest einen Zustandsparameter des Ladegeräts (22) basierenden Muster anzusteuern.

9. Logistiksystem (32), umfassend eine Vergleichseinheit (38) und zumindest ein erstes und ein zweites Flurförderzeug (2.1 .. 2.4) nach einem der Ansprüche 1 bis 5, **dadurch gekennzeichnet, dass** eine erste Steuereinheit (16.1) des ersten Flurförderzeugs (2.1) dazu eingerichtet ist einen ersten internen Fahrzeugzustandsparameter (P1) zu erfassen und an die Vergleichseinheit (38) zu übertragen und eine zweite Steuereinheit (16.2) des zweiten Flurförderzeugs (2.2) dazu eingerichtet ist einen zweiten internen Fahrzeugzustandsparameter (P2) zu erfassen und an die Vergleichseinheit (38) zu übertragen, wobei die Vergleichseinheit (38) dazu eingerichtet ist den ersten und den zweiten Fahrzeugzustandsparameter (P1, P2) miteinander zu vergleichen, ein Vergleichsergebnis zu erzeugen und ein erstes und ein zweites Steuersignal (S1, S2) zu generieren, wobei das erste Steuersignal (S1) ein Verhältnis des ersten Fahrzeugzustandsparameters (P1) zu dem Vergleichsergebnis kennzeichnet und das zweite Steuersignal (S2) ein Verhältnis des zweiten Fahrzeugzustandsparameters (P2) zu dem Vergleichsergebnis kennzeichnet, und wobei die Vergleichseinheit (38) ferner dazu eingerichtet ist das erste Steuersignal (S1) an die erste Steuereinheit (16.1) zu übertragen und das zweite Steuersignal (S2) an die zweite Steuereinheit (16.2) zu übertragen, wobei die erste Steuereinheit (16.1) dazu eingerichtet ist eine erste Fahrzeugleuchte (6) des ersten Flurförderzeugs (2.1) in einem auf dem ersten Steuersignal (S1) basierenden ersten Muster anzusteuern und die zweite Steuereinheit (16.2) dazu eingerichtet ist eine zweite Fahrzeugleuchte (6) des zweite Flurförderzeugs (2.2) in einem auf dem zweiten Steuersignal (S2) basierenden zweiten Muster anzusteuern.

10. Logistiksystem (32) nach Anspruch 9, **gekennzeichnet durch** einen Zentralrechner, der die Vergleichseinheit (38) umfasst, wobei der Zentralrechner (36) datentechnisch mit dem ersten und dem zweiten Flurförderzeug (2.1, 2.2) gekoppelt ist,
oder
**dadurch gekennzeichnet, dass** die Vergleichseinheit in dem ersten oder dem zweiten Flurförderzeug angeordnet ist und das erste und das zweite Flurförderzeug datentechnisch direkt miteinander gekoppelt sind,
oder
**gekennzeichnet durch** ein erstes und eine zweites Ladegerät (22.1, 22.2), wobei das erste Ladegerät (22.1) zum Aufladen einer Traktionsbatterie (14) des ersten Flurförderzeugs (2.1) mit dem ersten Flurförderzeug (2.1) verbunden ist und das zweite Ladegerät (22.2) zum Aufladen einer Traktionsbatterie (14) des zweiten Flurförderzeugs (2.2) mit dem zweiten Flurförderzeug (2.2) verbunden ist, wobei die Vergleichseinheit (38) in dem ersten oder dem zweiten Ladegerät (22.1, 22.2) angeordnet ist, und wobei das erste und das zweite Ladegerät (22.1, 22.2), das erste Ladegerät (22.1) und das erste Flurförderzeug (2.1) und das zweite Ladegerät (22.2) und das zweite Flurförderzeug (2.2) datentechnisch miteinander gekoppelt sind.

11. Verfahren zum Betrieb einer Beleuchtungseinrichtung (4) eines Flurförderzeugs (2), wobei die Beleuchtungseinrichtung (4) zumindest eine Fahrzeugleuchte (6) und eine Steuereinheit (16) zum Ansteuern der Fahrzeugleuchte (6) umfasst, **dadurch gekennzeichnet, dass** die Steuereinheit (16) zumindest einen Fahrzeugzustandsparameter (P) erfasst und die Fahrzeugleuchte (6) in einem auf dem zumindest einen Fahrzeugzustandsparameter (P) basierenden Muster ansteuert.

12. Verfahren nach Anspruch 11, **dadurch gekennzeichnet, dass** die Steuereinheit (16) ferner ein Näherungssignal (26) erfasst und in Reaktion auf eine erfolgreiche Erfassung des Näherungssignals (26) eine Ansteuerung der Fahrzeugleuchte (6) aktiviert.

13. Verfahren nach Anspruch 11 oder 12, **dadurch gekennzeichnet, dass** der Fahrzeugzustandsparameter (P) ein Ausstattungsmerkmal des Flurförderzeugs (2), ein Ladezustand einer Traktionsbatterie des Flurförderzeugs (2), eine Betriebsbereitschaft des Flurförderzeugs (2) und/oder ein Servicebedürfnis des Flurförderzeugs (2) ist, wobei insbesondere der Fahrzeugzustandsparameter mit mehreren Berechtigungskategorien verknüpft ist und das Näherungssignal (26) eine Information betreffend eine Berechtigungskategorie umfasst und wobei in Reaktion auf eine erfolgreiche Erfassung des Näherungssignals (26) die Berechtigungskategorie des Fahrzeugzustandsparameters und die Berechtigungskategorie des Näherungssignals verglichen werden und eine Ansteuerung der Fahrzeugleuchte (6) in Abhängigkeit eines Vergleichsergebnisses vorgenommen wird.

14. Verfahren nach einem der Ansprüche 11 bis 13, **dadurch gekennzeichnet, dass** der Fahrzeugzustandsparameter (P) ein interner Fahrzeugzustandsparameter (P) ist und das Muster einen Wert des Fahrzeugzustandsparameters (P) charakterisiert, oder
**dadurch gekennzeichnet, dass** der Fahrzeugzustandsparameter (P) ein interner Fahrzeugzustandsparameter (P) ist und die Steuereinheit (16) den internen Fahrzeugzustandsparameter (P) und zumindest einen Fahrzeugzustandsparameter (P) zumindest eines weiteren Flurförderzeugs (2) als zumindest einen externen Fahrzeugzustandsparameter (P) erfasst, den internen und den zumindest einen externen Fahrzeugzustandsparameter (P) miteinander vergleicht und die Fahrzeugleuchte (6) in einem Muster ansteuert, welches auf einem Ergebnis des Vergleichs der Fahrzeugzustandsparameter (P) basiert.

15. Verfahren zum Betrieb eines Logistiksystems (32), umfassend eine Vergleichseinheit (38) und zumindest ein erstes und ein zweites Flurförderzeug (2.1, 2.2) nach einem der Ansprüche 1 bis 6, **dadurch gekennzeichnet, dass** eine erste Steuereinheit (16.1) des ersten Flurförderzeugs (2.1) einen ersten internen Fahrzeugzustandsparameter (P1) erfasst und an die Vergleichseinheit (38) überträgt und eine zweite Steuereinheit (16.2) des zweiten Flurförderzeugs (2.2) einen zweiten internen Fahrzeugzustandsparameter (P2) erfasst und an die Vergleichseinheit (38) überträgt, wobei die Vergleichseinheit (38) den ersten und den zweiten Fahrzeugzustandsparameter (P1, P2) miteinander vergleicht, ein Vergleichsergebnis erzeugt und ein erstes und ein zweites Steuersignal (S1, S2) generiert, wobei das erste Steuersignal (S1) ein Verhältnis des ersten Fahrzeugzustandsparameters (P1) zu dem Vergleichsergebnis kennzeichnet und das zweite Steuersignal (S2) ein Verhältnis des zweiten Fahrzeugzustandsparameters (P2) zu dem Vergleichsergebnis kennzeichnet, und wobei die Vergleichseinheit (38) ferner das erste Steuersignal (S1) an die erste Steuereinheit (16.1) überträgt und das zweite Steuersignal (S2) an die zweite Steuereinheit (16.2) überträgt, wobei die erste Steuereinheit (16.1) eine erste Fahrzeugleuchte (6) des ersten Flurförderzeugs (2.1) in einem auf dem ersten Steuersignal (S1) basierenden ersten Muster ansteuert und die zweite Steuereinheit (16.2) eine zweite Fahrzeugleuchte (6) des zweite Flurförderzeugs (2.2) in einem auf dem zweiten Steuersignal (S2) basierenden zweiten Muster ansteuert,
wobei insbesondere das Logistiksystem (32) ein erstes und eine zweites Ladegerät (22.1, 22.2) umfasst, wobei das erste Ladegerät (22.1) zum Aufladen einer Traktionsbatterie (14) des ersten Flurförderzeugs (2.1) mit dem ersten Flurförderzeug (2.1) verbunden ist und das zweite Ladegerät (2.2) zum Aufladen einer Traktionsbatterie (14) des zweiten Flurförderzeugs (2.2) mit dem zweiten Flurförderzeug (2.2) verbunden ist, wobei die Vergleichseinheit (38) in dem ersten oder dem zweiten Ladegerät (22.1, 22.2) angeordnet ist, und wobei das erste und das zweite Ladegerät (22.1, 22.2), das erste Ladegerät (22.1) und das erste Flurförderzeug (2.1) und das zweite Ladegerät (22.2) und das zweite Flurförderzeug (2.2) datentechnisch miteinander in Verbindung stehen.
